# EUROPÄISCHE PATENTSCHRIFT

(11) **EP 1 034 426 B1**
(45) Veröffentlichungstag und Bekanntmachung des Hinweises auf die Patenterteilung: **31.03.2004**
(21) Anmeldenummer: 98965589.9
(22) Anmeldetag: 25.11.1998
(51) Int. Cl.: G01N 27/00

(54) **QUALITÄTSBESTIMMUNG EINER FORM ODER DES FORMSTOFFS MIT INDUZIERTER POLARISATION**
QUALITY CONTROL FOR MOULDS OR MOULDING MATERIALS WITH INDUCED POLARISATION
DETERMINATION DE LA QUALITE D'UN MOULE OU DE LA MATIERE DE MOULAGE PAR POLARISATION INDUITE

(30) Priorität: 26.11.1997 DE 19752400; 04.03.1998 DE 19809216
(43) Veröffentlichungstag der Anmeldung: 13.09.2000
(73) Patentinhaber: Künkel-Wagner Prozesstechnologie GmbH, 31061 Alfeld/Leine (DE)
(72) Erfinder: IVANOV, Marian, D-31061 Alfeld (DE)
(74) Vertreter: Leonhard, Frank Reimund, Dipl.-Ing.
(86) Internationale Anmeldenummer: PCT/DE1998/003481
(87) Internationale Veröffentlichungsnummer: WO 1999/028733

(56) Entgegenhaltungen:
- US-A- 4 930 354
- Soviet Inventions Illustrated, Sektion I, Woche W1, London: Derwent Publications Ltd., Klasse M, AN 75-01003W, XP002900436; & SU 409125 A (RATU-I).

## Beschreibung

Das technische Gebiet der Erfindung ist ein Verfahren zur Eigenschaftsbestimmung von tongebundenen Gießereiformstoffen und deren Komponenten an Formstoffproben oder Gießereiformen sowie zugehörige Korrekturen zur Durchführung des Verfahrens. Das Verfahren soll den Forderungen einer Qualitätssicherung bei leistungsstarken Formherstellungsanlagen, insbesondere hinsichtlich einer prozeßbegleitenden Kontrolle und Steuerung, entsprechen.

Eine Bewertung der Formstoffeigenschaften erfolgt in der Praxis der konventionellen Formstoffprüfung durch Bestimmung verschiedener technologischer und verarbeitungstechnischer Parameter (z.B. Festigkeits- und Deformationskennwerte), wie in **US 4,930,353** (Knopp et al.) beschrieben wird, vgl. dort Spalte 4, Zeilen 20 bis 34 und Figuren 2 und 5. Zu jedem der beim Formen und Gießen durchgeführten Arbeitsgänge existieren spezifische Prüfverfahren; die Vielzahl der heute verwendeten Parameter, es sind über 45 verschiedene bekannt, werden an Probekörpern oder Formstoffschüttungen im Labor ermittelt. Entscheidenden Einfluß auf die Formstoffeigenschaften haben die Komponenten seiner Zusammensetzung und vor allem der bindefähige Tonanteil (Aktivton) und die granulometrischen Kennwerte, vor allem der Schlämmstoffgehalt. Der Aktivton und der Schlämmstoff beeinflussen stark den Wasserbedarf des Formstoffes und tragen dazu bei, daß bei gleichem Befeuchtungszustand des Formstoffes unterschiedliche Festigkeits- und Deformationseigenschaften erreicht werden.

Zur Ermittlung der Formstoffzusammensetzung werden Sieb-, Sedimentations- und Adsorbtionsanalysen angewendet. Zwischen den Parametern der Formstoffzusammensetzung und den technologischen und verarbeitungstechnischen Parametern bestehen komplizierte Beziehungen. Die funktionelle Interpretation dieser Beziehungen scheitert u.a. an der prüftechnischen Gestaltung. Die bekannten empirisch ermittelten Beziehungen sind nicht eindeutig, äußerst unstetig und in ihrer Aussagekraft und Gültigkeitsbereich stark begrenzt.

Die konventionelle Laborprüfung besitzt außerdem eine große Trägheit, d.h. die Zeitspanne von der Probenahme bis zur Meßwertverfügbarkeit ist sehr groß. Die angewendeten Sedimentationsund Adsorbtionsanalysen für die Bestimmung des Schlämmstoff- und Aktivtongehaltes sind mit einem hohen zeitlichen Aufwand verbunden und können nicht zur prozeßbegleitenden Überwachung eingesetzt werden.

Die meisten automatischen Systeme (Prüfautomaten) zur prozeßbegleitenden Überwachung und Steuerung optimaler Formstoffeigenschaften benutzen einige aus der konventionellen Formstoffprüfung bekannte technologische und verarbeitungstechnische Parameter:
Verdichtbarkeit, Druck-, Scherfestigkeit, Verformungsgrenze. Ein Nachteil solcher Prüfautomaten ist, daß sie die im Produktionsbetrieb auftretenden Schwankungen des Schlämmstoff- und Aktivtonanteils nicht oder äußerst ungenügend registrieren können. Die vom Prüfautomaten ermittelte Änderung der Festigkeits- und Deformationseigenschaften reicht nicht aus, um eine Änderung des Schlämmstoff- und/oder des Aktivtonanteils eindeutig nachzuweisen. Die Aussagekraft der dafür notwendigen Verknüpfungsbeziehungen ist stark begrenzt

Es sind außerdem - relativ teure - Prüfautomaten für prozeßbegleitende Überwachung und Steuerung bekannt, die die Deformationseigenschaften des Formstoffes mittels Ultraschallmessungen bestimmen. Aus der Ultraschallgeschwindigkeit eines definierten Probekörpers werden im Kombination mit weiteren Formstoffparametern Rückschlüsse über die Formstoffzusammensetzung (Schlämmstoff- und Aktivtongehalt) gezogen. Nachteilig ist der starke Einfluß der Probekörperherstellung auf die Ultraschallmessung.

Aufgabe der Erfindung ist es, eine komfortable Durchführung der Messungen (zerstörungsfrei, schnell, leicht automatisierbar) zu ermöglichen und eine ausreichend hohe Aussagefähigkeit gegenüber Veränderungen der Formstoff- und Formqualität und insbesondere gegenüber Veränderungen der Formstoffzusammensetzung zu besitzen. Die Messungen sollen an definierten Prüfkörpern oder an Gießereiformen während des Herstellungsprozesses erfolgen können.

Erfindungsgemäß wird diese Aufgabe dadurch gelöst, daß zur Eigenschaftsbestimmung von tongebundenen Gießereiformstoffen und deren Komponenten Messungen der elektrischen Eigenschaften, insbesondere der induzierten Polarisation (IP) an (noch) schüttfähigem Formstoff, mehr oder weniger stark verdichteten Formstoffproben oder schon fertigen Gießereiformen durchführt (Ansprüche 1, 10, 13). Die elektrischen Signale wirken direkt ein, werden also durch Leitfähigkeit auf den Formstoff übertragen. Als solche werden keine Ultraschallsignale oder indirekt wirkenden elektromagnetischen Radio- oder Mikrowellen angesehen, die in einem höheren Frequenzbereich angesiedelt sind, als die Erfindung mit dem Einsatz niederfrequenter Wechselspannung beabsichtigt. Die von niederfrequenten Wechselsignalen ausgehenden elektromagnetischen Felder lösen sich nicht von den Sensoren oder Sendern, das geschieht erst bei höheren Frequenzen, so daß als direkte Beaufschlagung des Formstoffes die galvanische Ankopplung, also die durch Leitfähigkeit und Berührung, insbesondere Druck, entstehende Einkopplung der elektrischen Signale gemäß der Erfindung vorgesehen wird.

Polarisationseffekte treten z. B. in elektrolytleitenden Gesteinen ohne elektrische Leitfähigkeit auf. Sie äußern sich bei Gleichstrommessungen darin, daß beim Anlegen der Spannung eine bestimmte Zeit (Sekunden bis Minuten) bis zum Aufbau des Feldes und nach dem Abschalten bis zum Abbau des Feldes vergeht. Bei Wechselstrommessungen äußern sie sich als Dispersion, die vor allem im niederfrequenten Bereich ausgeprägt ist

Die wichtigsten festen Bestandteile des tongebundenen Formstoffes sind der Grundstoff Sand, das Bindemittel Ton (meist Bentonit aber auch Kaolinit, Illit u.a.) und (mit wenigen Ausnahmen etwa bei der Herstellung bestimmter Stahlgußsorten) der Zusatzstoff Glanzkohlenstoffbildner. Nach ihrer geologischen bzw. genetischen Herkunft sind die Sande und Tone unverfestigte klastische Sedimente. Als Glanzkohlenstoffbildner werden meist steinkohle- und graphithaltige Stäube verwendet.

Mit der Erfindung wird die Übertragung physikalischer Formstoffdaten (bestimmter bzw. bestimmbarer physikalischer Parameter , z. B. induzierte Polarisationsspannung, komplexer Widerstand) in parameter-invariante Einflußgrößen (z. B. Gehalt und Eigenschaften der Bestandteile, Formherstellungs-, Probeherstellungs- und Meßbedingungen) bzw. in technologisch interessierende Parameter (Festigkeits- und Deformationseigenschaften) mittels einfacher und/oder komplexer Verknüpfungsbeziehungen ermöglicht.

Zur Bestimmung der Höhe der induzierten Polarisation werden erfindungsgemäß zwei mögliche Messungen vorgeschlagen: mittels Gleichstrommessungen (Anspruch 4) oder mittels niederfrequenter Wechselstrommessungen (Anspruch 3) an Formstoffproben oder in-situ an der Gießform, zur direkten und unmittelbaren (on-line) Bestimmung z.B. des Aktivtongehaltes.

Bei Messungen mit Gleichstrom erfolgt eine kontinuierliche oder punktweise Aufnahme von Spannungsabklingkurven, die den zeitlichen Verlauf der Polarisationsspannung nach Abschalten einer den Polarisationseffekt hervorrufenden definierten Erregerspannung beschreibt. Die Aufnahme einer Spannungskurve während des Schaltvorganges, d.h. beim Aufbau des elektrischen Feldes, ist auch möglich (Anspruch 7).

Die Messung mit Wechselstrom erfolgt im Niederfrequenzbereich, unter 100 Hz, vorzugsweise im Bereich unter etwa 10 Hz. Zur Charakterisierung der induzierten Polarisation werden die scheinbaren Widerstände der Formstoffprobe bzw. der Gießform oder die Phasenverschiebung zwischen Spannung und Strom bei mehreren, vorzugsweise bei zwei unterschiedlichen Frequenzen aufgenommen. Eine vollständige Aufnahme der Dispersionskurve ist auch möglich.

Besonders günstige Ergebnisse mit den Effekten der durch die Spannungen erzeugten Polarisationserscheinungen in dem Formstoff haben niederfrequente, leitfähig eingekoppelte Wechselspannungen an unverdichteten Formstoffproben und deutlich beabstandete Einzelpulse von Gleichspannungen an - zumindest teilweise - verdichteten Formen oder Formstoffproben ergeben. Die einzelnen Impulse wurden dabei nicht schnell hintereinander, sondern im Sekundenbereich, also nicht unter einer zeitlichen Beabstandung von einer Sekunde auf den Formstoff aufgebracht und mit der Spannung oder dem aus ihr resultierenden Strom kann die Messung von effektiven physikalischen Parametern, die auf den durch die Spannungen entstandenen Polarisationserscheinungen beruhen, erfolgen, woraus Formstoff- oder Formqualitäts-Parameter abgeleitet werden, die direkt am Meßort zur Veränderung des noch nicht verdichteten Formstoffs führen (Anspruch 13).

Ermöglicht wird damit eine rückgekoppelte Regelschleife für die Formstoffqualität, ohne daß Labormessungen und die durch sie begründeten langen Laufzeiten zwischen einer Messung und einem regelnden Eingriff in Anspruch genommen werden müssen. Die Anpassung des Formstoffs, z.B. hinsichtlich seiner Feuchte oder hinsichtlich seines Aktivtongehaltes kann sofort angepaßt werden, wenn die Messungen der induzierten Polarisationserscheinungen Werte signalisieren, die eine einwandfreie verdichtete Form, also eine Formqualität nicht erfüllen. Dementsprechend wird entgegenwirkend die Zugabe von Zuschlagsstoffen während der Aufbereitung des noch nicht verdichteten Sand gesteuert oder geregelt.

Ausführungs**beispiele** erläutern und ergänzen die Erfindung.
- **Fig. 1**: ist ein Beispiel einer Prüfvorrichtung im Schnitt und in Aufsicht.
- **Fig. 1a**: zeigt einen Meßkurvenverlauf uᵢₚ(t).
- **Fig. 2**: zeigt Beispielkurven als Meßergebnisse aus Formstoffproben.
- **Fig. 3**: ist eine schematische Darstellung eines Prüfverfahrens.

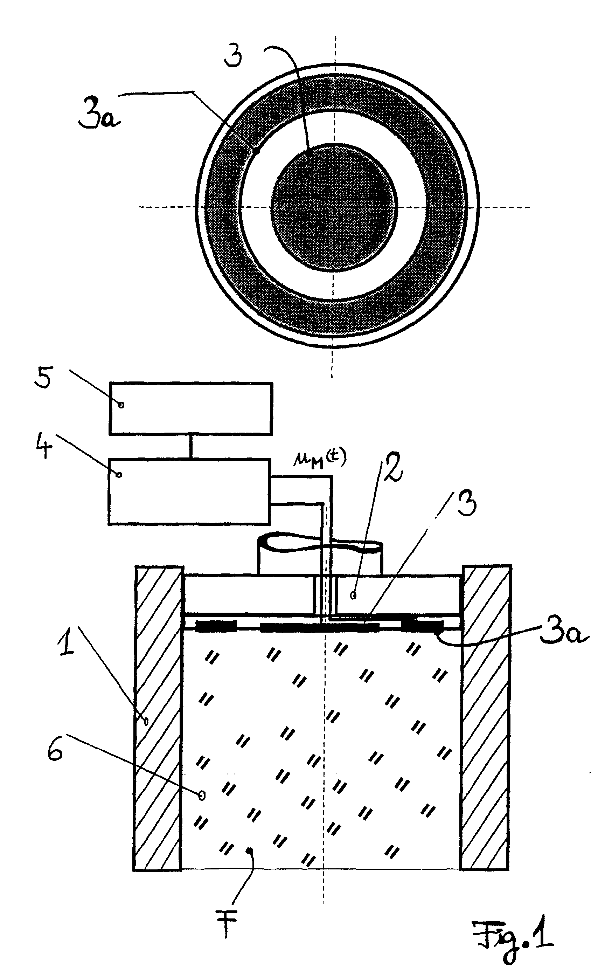

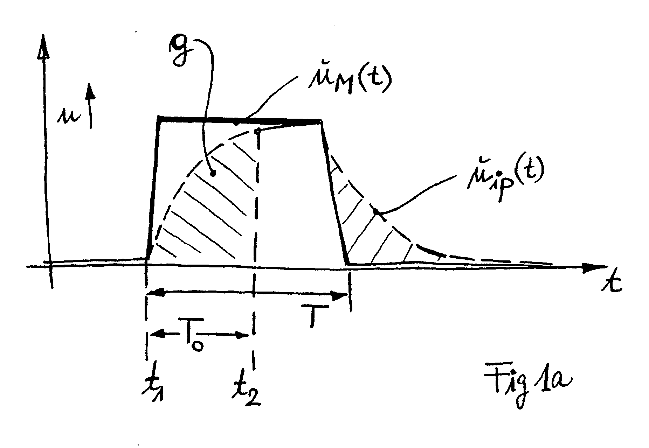

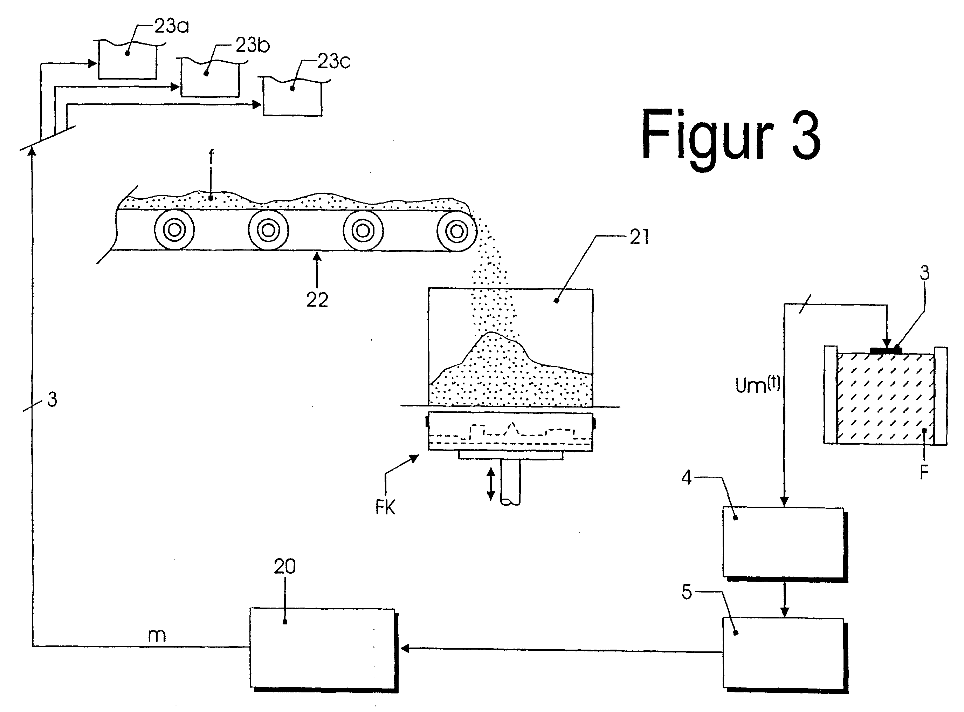

**Figur 1** zeigt ein Ausführungsbeispiel, bei dem eine Prüfvorrichtung aus einer Prüfhülse 1, einem Preßstempel 2 mit Flächenelektrode 3 und einer zweiten Flächenelektrode 3a, einer Meßund Steuereinheit 4 und einer Auswerteeinheit 5 besteht. Eine Formstoffprobe 6 (oder F) aus schüttfähigem Formstoff f (vgl. dazu Fig. 3) wird mit Hilfe des Preßstempels 2 in der Prüfhülse 1 unter definierten Bedingungen (Formstoffmenge, Preßdruck, Verdichtungszeit) hergestellt. Während des Pressens oder zum Preßende wird zwischen den Flächenelektroden 3,3a eine definierte Induktionsspannung angelegt. Die Höhe der Spannung und die Induktionsdauer T werden von einer Meß- und Steuereinheit 4 gesteuert. Nach Ablauf der definierten Induktionsdauer wird die Spannung ausgeschaltet und über die Meß- und Steuereinheit 4 die Abklingkurve u_{M}(t) der Polarisationsspannung aufgenommen.

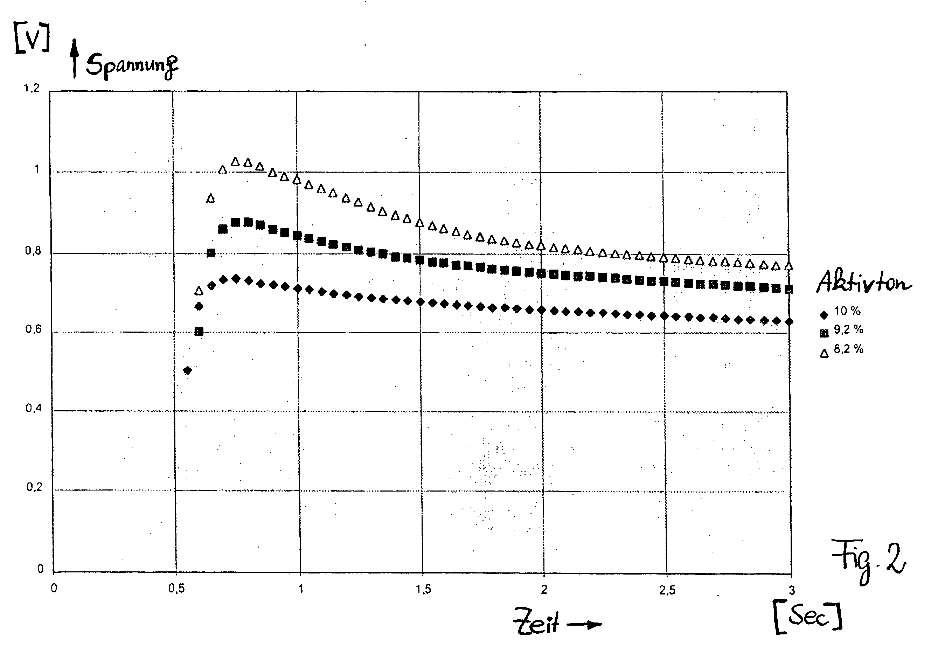

**Figur 2** zeigt Beispielkurven von unterschiedlichen Formstoffproben. Die einzelnen Formstoffproben/Formen wurden beispielsweise durch Pressen mit 1 MPa hergestellt und mit einer Spannung von 45 V für eine Ladedauer von 10 sec bei einem Ankopplungsdruck von 70 kPa behandelt. Die angegebenen Prüfparameter stellen keine notwendigen Prüfbedingungen dar. Die Prüfparameter, die zum Nachweis der Polarisationseffekte verwendet werden, beschränken sich lediglich auf eine ausreichend hohe Form- bzw. Probestabilität, einen ausreichend hohen Ankopplungsdruck, eine ausreichend hohe Spannung und eine ausreichend lange Induktionsdauer (Ladedauer). Die Form und die Abmessungen der Flächenelektrode beeinflussen zusätzlich die Prüfparameter.

Neben der in Figur 1 dargestellten Ausführungsform mit einer konzentrisch angeordneten Ringelektrode 3a sind Flächenelektroden mit mehreren konzentrischen Kreisen, Ringen oder solche in eckiger Form möglich.

Die in Figur 1 dargestellte Prüfvorrichtung besitzt eine integrierte Probeherstellungseinrichtung. Prüfgeräte zur Messung an separat hergestellten Probekörpern oder Formen werden mit einer Ankoppelvorrichtung ausgestattet. Prüfgeräte zur Messung in situ an einer Formmaschine im Betrieb der Anlage werden in der Verdichtungsstation der Formmaschine integriert, siehe dazu die Figur 3.

Tongebundene Formstoffe werden als ein Mehrstoffgebilde dargestellt, das im "Mikrobereich" heterogen ist. Die Angaben von physikalischen Parametern beziehen sich auf Volumenbereiche, für die eine "makroskopische Homogenität" vorliegt. Die makroskopische Homogenität wird einerseits durch Einhaltung bestimmter Toleranzen in der stofflichen Zusammensetzung und der Ausbildung im betrachteten Volumenbereich und andererseits durch Relationen zwischen den Dimensionen der Einzelbestandteile und denen der "Probenabmessungen" gewährleistet.

Die unter der Voraussetzung makroskopischer Homogenität aufgenommenen Meßwerte stellen effektive physikalische Parameter dar, die die physikalischen Eigenschaften des Formstoffes als Mehrstoffgebilde widerspiegeln und von den Anteilen und spezifischen Eigenschaften der Bestandteile sowie deren Anordnung und Bindung bestimmt sind.

Die Ursachen der induzierten Polarisation (IP) liegen vorrangig in elektrochemischen Effekten. Die induzierte Polarisation tritt dann auf, wenn ein elektrisch leitendes Partikel oder Bereiche und elektrolytisch leitende Bereiche aneinandergrenzen und/oder wenn Porenräume teilweise oder vollständig mit mineralisiertem Wasser gefüllt sind und Zonen verschiedener Beweglichkeit für die Anionen und Kationen des Elektrolyten aneinandergrenzen. Beim Anlegen eines elektrischen Feldes treten in Abhängigkeit von der Polarität Ladungsverschiebungen auf, die Polarisationserscheinungen verursachen und als effektive physikalische Parameter entsprechend den oben beschriebenen Meßmethoden nachgewiesen werden können. Elektrisch leitende Partikel oder Bereiche sind im tongebundenen Formstoff die Graphitteilchen und kleine Metallpartikel sowie diverse metallische Oxide und Sulfide. Die elektrolytisch leitende Bereiche sind die teilweise oder vollständig tongefüllten Porenräume. Als Elektrolyt fungiert das im Ton enthaltene Zwischenschichtwasser.

Die "effektiven physikalischen Parameter" der induzierten Polarisation dienen der Bestimmung der Formstoffqualität. Effektive physikalische Parameter der induzierten Polarisation sind kontinuierlich oder punktweise aufgenommene Spannungsabkling- oder Einschaltkurven; charakteristische Punkte oder Teile dieser Kurven; Differenzen und/oder Quotienten der scheinbaren Widerstände oder die Phasenverschiebung zwischen Spannung und Strom bei Beaufschlagung mit Wechselspannung.

Unter der Annahme einer praxisrelevanten Formstoff-Zusammensetzung und konstanter Herstellungsbedingungen für Formen bzw. Proben kann die Abhängigkeit der Parameter der induzierten Polarisation von der Formstoffzusammensetzung vereinfacht werden. Die Vereinfachung ermöglicht z. B. die in Figur 2 dargestellte Abhängigkeit der induzierten Polarisationsspannung vom Aktivtongehalt.

Unter Einbeziehung weiterer Formstoffkennwerte (z. B. Wassergehalt bzw. Dielektrizitätskonstante oder elektrische Leitfähigkeit, Korngröße etc.) und/oder technologischer Parameter (Verdichtbarkeit, Schüttdichte u.ä.) werden komplexe Aussagen über die Formstoffzusammensetzung: Aktivtongehalt, Schlämmstoffgehalt und Kohlenstoffgehalt getroffen. Dabei werden Abhängigkeiten verwendet, die mit Hilfe von Regressionsmodellen erstellt sind. Die Bestimmung der Formstoffzusammensetzung erfolgt on-line in einer mikroprozessorgesteuerten Auswerteeinheit 5, die in der speicherprogrammierten Steuerung (SPS) der Form- oder Sandaufbereitungsanlage integriert ist oder eine selbständige Einheit (Prüfgerät) darstellt.

Die Meßergebnisse dienen der Durchführung geeigneter Maßnahmen zur Stabilisierung der Formstoffqualität, z.B. eine entsprechende Rezepturänderung. Die Rezepturänderung erfolgt automatisch oder kann vom Bediener der Formanlage oder der Sandaufbereitungsanlage - vor Änderung - quittiert werden.

Die Prüfvorrichtung der Fig. 1 ist in der **Figur 3** im Schema eingebaut in den Sand-Befüllungsbereich einer Formmaschine mit Verdichtungsstation, die im übrigen aber nicht näher dargestellt ist, da sie insoweit bekannt ist. Nicht bekannt ist aber die Art und Weise wie die Formstoffqualität direkt an der Formmaschine über das in Fig. 3 skizzierte Verfahrensschema gemessen wird und über eine Regelung in Form einer geschlossenen Regelschleife mit praktisch keiner Totzeit oder Laufzeit (die durch Labormessungen entstehen) ausgerüstet ist. Dargestellt ist in der Fig. 3 schematisch die Förderung eines noch nicht verdichteten Formstoffes f auf einem Transportband 22, das in einen Sandbunker 21 führt. Unter dem Sandbunker ist ein Formkasten FK gezeigt, der mit einem Hubtisch verfahrbar ist und Lamellenklappen öffnen sich, um den Formkasten zu befüllen. In ihm ist ein Modell zu erkennen, das in die Sandfläche eingeformt werden soll. Oberhalb des zugeförderten unverdichteten Formstoffes f sind Zugabestationen 23a,23b,23c schematisch skizziert, die unterschiedliche Bestandteile zu dem Formstoff hinzufügen können, so Wasser, Aktivton oder sonstige Schlämmstoffe, jeweils gesteuert über ein gesondertes Steuersignal, das von einer Stelleinrichtung 20 ausgeht. Das von ihr ausgegebene Stellsignal m wählt aus, welche der Zugabestationen angesteuert wird und wieviel von einem bestimmten Zuschlagstoff dem noch nicht verdichteten Formstoff f zugegeben werden soll. Als Basis dazu dienen die Meßwerte der an dem Prüfkörper F durch induzierte Polarisation gemessenen Zusammensetzung oder Eigenschaften, über die bereits beschriebene Auswerteeinheit 5 und die Meß- und Steuereinheit 4, die das Meßsignal u_{M}(t) nach unterschiedlichen Kriterien auswertet, die zuvor erläutert wurden.

Der in den Bunker eingefüllte Formstoff f wird entweder direkt am Bunker oder vor der Befüllung in den Formkasten FK als kleine Probe abgezweigt und mit einer kleinen Presse unter gleichen oder sehr ähnlichen Bedingungen, wie die Hauptpresse für den Formstoff im Formkasten, verdichtet zur Bildung eines aus dem unverdichteten Formstoff f hergestellten Prüfkörpers F, an dem die Messung über induzierte Polarisation erfolgt. Damit ist die Regelschleife geschlossen und es wird on-line direkt an der Fertigungsmaschine eine Steuerung der Formstoffqualität des noch nicht verdichteten Formstoffes f zuverlässig erreicht.

In gleicher Weise wie die Figur 3 den verdichteten Formstoff F mißt, ist die induzierte Polarisation auch entsprechend auf unverdichteten Formstoff f oder zumindest teilweise verdichteten Formstoff anwendbar, hier speziell mit niederfrequenter Wechselspannung, die an die Elektrode 3 angelegt wird.

## Patentansprüche

1. **Verfahren** zur Bestimmung der Eigenschaft oder Zusammensetzung von schüttfähigen Formstoffen (f) oder schon aus solchen Formstoffen verdichteten Formen oder Formstoffproben (F) in der Gießerei-Formherstellung;
(a) wobei auf den Formstoff ein elektrischer Einfluß in Form einer Gleichspannung oder in Form einer niederfrequenten Wechselspannung (3,3a) ausgeübt wird,
(aa) wobei die Wechselspannung auf den noch unverdichteten oder schon verdichteten Formstoff direkt einwirkt; oder
(bb) die Gleichspannung pulsartig auf den verdichteten Formstoff direkt einwirkt;
(b) eine Folge des elektrischen Einflusses gemäß Verfahrensschritt (a) gemessen und ausgewertet (4,5) wird.

2. Verfahren nach Anspruch 1, bei dem der Formstoff ein tonhaltiger, insbesondere ein tongebundener Formstoff ist und das Verfahren den Aktivtongehalt im Formstoff (F) bestimmt.

3. Verfahren nach einem der vorherigen Ansprüche, bei dem eine induzierte Polarisationsspannung oder ein komplexer Widerstand bei Beaufschlagung des Formstoffes mit der niederfrequenten Wechselspannung im Bereich zwischen 1 Hz und 100 Hz ausgewertet wird.

4. Verfahren nach einem der Ansprüche 1 oder 2, bei dem der Formstoffmit Gleichspannung für eine vorgegebene Ladezeit (T) beaufschlagt wird.

5. Verfahren nach Anspruch 4, bei dem nach Abschalten der Gleichspannung, also dem Ende der Ladezeit (T), die entstehende Abklingkurve des elektrischen Feldes im Formstoff oder die am Formstoff noch meßbare abklingende Spannung (u_{M}(t), uᵢₚ(t)) ausgewertet wird (Fig. 2).

6. Verfahren nach Anspruch 4 oder 5, bei dem die verzögerte Anklingkurve des elektrischen Feldes in dem Formstoff oder der fertigen Form ausgewertet wird, durch Messung des fließenden Stromes.

7. Verfahren nach einem der Ansprüche 4 bis 6, bei dem
eine bestimmte Spannung zu einem bestimmten Zeitpunkt
oder
der gesamte oder nur zwischen zwei Zeitpunkten (t₁,t₂) liegende Flächeninhalt (g) der Abklingkurve oder Anklingkurve der pulsartigen Gleichspannung ausgewertet wird, insbesondere solcher pulsartiger Gleichspannung, deren Ladezeit (T) zwischen 0,1 sec und 10 sec liegt.

8. Verfahren nach einem der vorherigen Ansprüche, bei dem die Konsistenz des Formstoffes bei der Herstellung kontinuierlich oder abschnittsweise überprüft oder gemessen wird.

9. Verfahren nach Anspruch 8, bei dem die Konsistenz des Formstoffes aufgrund der Messung direkt bei der Verarbeitung des Formstoffes verändert wird, um direkten Einfluß auf den Formstoff oder seine Formstoffqualität und die mit ihm durch Verdichten hergestellten Formen zu nehmen.

10. **Vorrichtung** zur Durchführung eines Verfahrens nach einem der vorgenannten Verfahrensansprüche oder zur Messung von Formstoff hinsichtlich seiner Zusammensetzung oder Eigenschaft, welche Vorrichtung
(a) eine Spannungsquelle (4) aufweist, die einen Gleichspannungspuls (T) oder ein niederfrequentes Wechselspannugssignal aufweist;
(b) zwei Elektroden (3,3a) aufweist, um den von der Spannungsquelle (4) erzeugten Gleichspannungspuls (T) oder das niederfrequente Wechselspannungssignal auf einen zuvor verfestigten Formkörper (F) aus Formstoff oder einen noch unverdichteten Formstoff (f) zu geben;
(c) eine Auswerteeinheit (4,5) aufweist, die nach Abschalten des Pulses oder beim Einschalten des Pulses die durch den Formstoff verursachte Veränderung im Spannungs- oder Stromverlauf oder die Veränderung der Wechselspannung, insbesondere der Phasenlage des Stromes, in einen Meßwert für die Zusammensetzung des Formstoffes (F,f) umsetzt,
um eine Aussage über den Gehalt an Aktivton, Schlämmstoff oder Kohlenstoff zu erhalten.

11. Vorrichtung nach Anspruch 10, die eine Prüfhülse (1) und einen Preßstempel (2) mit Flächenelektrode (3) aufweist.

12. Vorrichtung nach Anspruch 10, bei der die Vorrichtung in der Verdichtungsstation einer Formmaschine integriert ist, um die verdichtete Form direkt hinsichtlich ihrer Eigenschaften zu messen, insbesondere mit einer Steuereinrichtung (20), um eine dem Meßwert (m) entsprechende Änderung in der Zusammensetzung des noch nicht verdichteten Formstoffs (f) ohne wesentliche Verzögerung zu bewirken.

13. **Verwendung** einer niederfrequenten Wechselspannung oder einer pulsartig mit niedriger Wiederholrate direkt auf den Formstoff (f,F) aufgebrachten Gleichspannung zur direkten Qualitätsbestimmung des Formstoffs, insbesondere seines Aktivtongehaltes, über die Messung von effektiven physikalischen Parametern, die auf durch Spannung oder Strom induzierten Polarisationserscheinung(en) im Formstoff (F) beruhen.

14. Verwendung nach Anspruch 13, bei welcher der Formstoff (F) verdichtet ist.

## Claims

1. A method for determining the characteristics or composition of pourable moulding materials (f) or mouldings already compressed from such moulding materials or moulding material test pieces (F) in the production of mouldings in the foundry:
(a) whereby an electrical influence in the form of a direct current voltage or in the form of a low frequency alternating voltage (3,3a) is exerted on the moulding material,
(aa) whereby the alternating voltage works directly on the still uncompressed or already compressed moulding material; or
(bb) the direct current voltage works directly in the form of pulses on the compressed moulding material;
(b) the result of the electrical influence applied in accordance with stage (a) of the method is measured and evaluated (4,5).

2. A method according to claim 1, in which the moulding material is argillaceous, especially a clay-bound moulding material and the method determines the active clay content of the moulding material (F).

3. A method according to one of the foregoing claims, in which an induced polarisation voltage or a complex impedance is evaluated on impacting the moulding material with low frequency alternating current in the range between 1Hz and 100Hz.

4. A method according to claim 1 or claim 2, in which the moulding material is impacted with direct current voltage for a predetermined charging time (T).

5. A method according to claim 4, in which following the removal of the direct current voltage, that is the end of the charging time (T), the consequent decay curve of the electrical field in the moulding material or the voltage still decaying on the moulding material (u_{M}^{(t)}, uᵢₚ^{(t)}) is evaluated (Fig. 2).

6. A method according to claim 4 or claim 5 in which the delayed decay curve of the electrical field in the moulding material or the completed mould is evaluated by measurement of the current flowing.

7. A method according to one of the claims 4 to 6, in which
a determined current at a determined point of time
or
the total surface content (g) of the decaying curve or that only which lies between two time points (t₁,t₂) or the decaying curve of the pulse shaped direct current is evaluated especially that pulse type direct current voltage whose charge time (T) lies between 0.1 sec and 10 sec.

8. A method according to one of the foregoing claims, in which the consistency of the moulding material is tested or measured in production continuously or by sampling.

9. A method according to claim 8, in which the consistency of the moulding material is changed directly during the processing of the moulding material on the basis of the measurement so as to have a direct influence on the moulding material or its moulding quality and the moulds produced by its compression.

10. A device for the performance of a method according to one of the foregoing method claims or for the measurement of moulding material with respect to its composition or characteristics, which device
(a) has a voltage source (4) which has a direct current voltage pulse (T) or a low frequency alternating voltage signal;
(b) has two electrodes (3,3a), in order to apply the direct current voltage pulse (T) or the low frequency alternating voltage signal generated by the voltage source (4) to a previously solidified moulded body (F) of moulding material or to still uncompressed moulding material (f);
(c) has an evaluating unit (4,5) which following the disconnection of the pulse or on the switching on of the pulse converts the change in the voltage or current curve or the change of the alternating voltage, especially the phase position of current into a measurement value for the composition of the moulding material (F,f),
in order to obtain a statement on the content of active clay, sludge or carbon.

11. A device according to claim 10, which has a test sleeve (1) and a press stamp (2) with surface electrodes (3).

12. A device according to claim 10, in which the device is integrated into the compressing station of a moulding machine so as to measure the compressed form directly with respect to its characteristics, especially with a control device (20) to effect a change corresponding to the test value (m) into the composition of the still not compressed moulding material (f) without substantial delay.

13. The use of a low frequency alternating voltage or a direct current voltage applied in the shape of a pulse with low repetition rate directly to the moulding material (f,F) for the direct determination of the quality of the moulding material, especially its active clay content, by the measurement of effective physical parameters which are based on the induced polarisation effects in the moulding material (F) by voltage or current.

14. An application according to claim 13, in which the moulding material (F) is compressed.

## Revendications

1. Procédé de détermination, dans la fabrication de moules de fonderie, de la nature ou de la composition de matériaux en vrac pour moules (f), de moules déjà compactés faits de tels matériaux, ou d'échantillons de matériau pour moules (F) ;
(a) dans lequel une influence électrique sous forme de tension continue ou sous forme de tension alternative à fréquence basse (3, 3a) est exercée sur le matériau pour moules,
(aa) la tension alternative influant directement sur le matériau pour moules qui n'est pas encore compacté ou qui est déjà compacté ; ou
(bb) la tension continue influant directement, par impulsions, sur le matériau pour moules compacté ;
(b) et dans lequel un résultat de l'influence électrique selon l'étape de procédé (a) est mesuré et analysé (4, 5).

2. Procédé selon la revendication 1, dans lequel le matériau pour moules est un matériau pour moules qui contient de l'argile, notamment à liaison d'argile, et dans lequel le procédé détermine la teneur en argile active dans le matériau pour moules (F).

3. Procédé selon l'une des revendications précédentes, dans lequel est analysée une tension de polarisation induite ou une résistance complexe lors de la soumission du matériau pour moules à la tension alternative à fréquence basse comprise entre 1 Hz et 100 Hz.

4. Procédé selon l'une des revendications 1 ou 2, dans lequel le matériau pour moules est soumis à une tension continue pendant une durée de charge prescrite (T).

5. Procédé selon la revendication 4, dans lequel la courbe décroissante du champ électrique dans le matériau pour moules obtenue ou la tension décroissante encore mesurable au niveau du matériau pour moules (u_{M}(t), uᵢₚ(t)) est analysée après coupure de la tension continue, c'est-à-dire après expiration de la durée de charge (T) (figure 2).

6. Procédé selon la revendication 4 ou 5, dans lequel la courbe croissante retardée du champ électrique dans le matériau pour moules ou dans le moule achevé est analysée par mesurage du courant qui s'écoule.

7. Procédé selon l'une des revendications 4 à 6, dans lequel est analysée
une tension déterminée à un instant donné
ou
la totalité ou seulement une partie, comprise entre deux instants (tl, t2), de la superficie (g) de la courbe décroissante ou de la courbe croissante de la tension continue sous forme d'impulsions, notamment d'une tension continue sous forme d'impulsions dont la durée de charge (T) est comprise entre 0,1 seconde et 10 secondes.

8. Procédé selon l'une des revendications précédentes, dans lequel la consistance du matériau pour moules est contrôlée ou mesurée de manière continue ou de manière périodique lors de la fabrication.

9. Procédé selon la revendication 8, dans lequel la consistance du matériau pour moules est modifiée en fonction du mesurage au cours même de la mise en oeuvre du matériau pour moules, pour avoir une influence directe sur le matériau pour moules ou sur sa qualité de matériau pour moules et sur les moules fabriqués avec lui par compactage.

10. Dispositif de mise en oeuvre d'un procédé selon l'une des revendications de procédé mentionnées ci-dessus ou de mesurage de la composition ou de la nature du matériau pour moules, lequel dispositif comporte :
(a) une source de tension (4) à impulsion de tension continue (T) ou à signal de tension alternative à fréquence basse ;
(b) deux électrodes (3, 3a) servant à délivrer l'impulsion de tension continue (T) ou le signal de tension alternative à fréquence basse produits par la source de tension (4) sur un corps de moule (F) préalablement consolidé et constitué de matériau pour moules ou sur un matériau pour moules qui n'est pas encore compacté (f) ;
(c) une unité d'exploitation (4, 5) qui, après arrêt de l'impulsion ou lors de l'envoi de l'impulsion, transforme en une valeur mesurée relative à la composition du matériau pour moules (F, f) la modification causée à la courbe de tension ou à la courbe de courant par le matériau pour moules ou la modification de la tension alternative, notamment la modification de la position des phases du courant, pour obtenir une information sur la teneur en argile active, en boues ou en carbone.

11. Dispositif selon la revendication 10, lequel comporte un manchon d'essai (1) et un plateau de compression (2) à électrode plane (3).

12. Dispositif selon la revendication 10, dans lequel le dispositif est intégré au poste de compactage d'une machine à mouler afin de mesurer directement les particularités du moule compacté et comporte, notamment, un dispositif de commande (20) servant à effectuer sans retard sensible une modification de la composition du matériau pour moules pas encore compacté (f) correspondant à la valeur mesurée (m).

13. Utilisation d'une tension alternative à fréquence basse ou d'une tension continue sous forme d'impulsions, à faible taux de répétition, appliquée directement sur le matériau pour moules (f, F), afin de déterminer directement la qualité du matériau pour moules, notamment sa teneur en argile active, en mesurant des paramètres physiques effectifs qui sont fondés sur un ou plusieurs phénomènes de polarisation induits dans le matériau pour moules (F) par la tension ou par le courant.

14. Utilisation selon la revendication 13, le matériau pour moules (F) étant compacté.
